# FASCICULE DE BREVET EUROPEEN

(11) **EP 1 342 028 B1**
(45) Date de publication et mention de la délivrance du brevet: **21.03.2007**
(21) Numéro de dépôt: 01999767.5
(22) Date de dépôt: 04.12.2001
(51) Int. Cl.: F16K 31/126, F16K 1/30, F16K 41/10

(54) **ROBINET A COMMANDE PAR SERVOMOTEUR POUR RECIPIENT DE FLUIDES TOXIQUES**
SERVOGESTEUERTES SICHERHEITSVENTIL FÜR BEHÄLTER FÜR TOXISCHE FLUIDE
SERVO-CONTROLLED SAFETY VALVE FOR TOXIC FLUID CONTAINER

(30) Priorité: 08.12.2000 FR 0016009
(43) Date de publication de la demande: 10.09.2003
(73) Titulaire: Arkema France, 92800 Puteaux (FR)
(72) Inventeur: ESTREMS, Christian, F-38070 Saint Quentin Fallavier (FR); BEAUSEIGNEUR, Jean-Claude, F-62320 Rouvroy (FR)
(74) Mandataire: Hirsch & Associés
(86) Numéro de dépôt international: PCT/FR2001/003819
(87) Numéro de publication internationale: WO 2002/046652

(56) Documents cités:
- FR-A- 2 619 432
- GB-A- 2 077 393
- GB-A- 2 118 329
- US-A- 4 763 690
- US-A- 5 127 436

## Description

L'invention concerne un robinet étanche, et plus particulièrement un robinet étanche pour récipient de transport de fluides toxiques.

Il est connu d'utiliser un robinet pour isoler le contenu de récipients mobiles de l'extérieur, notamment dans le domaine du transport ferroviaire. Les robinets classiques destinés aux récipients de transport de fluides toxiques, tels que le HCl ou le BF₃, se présentent sous la forme d'un corps monté sur les récipients qui assure la jonction entre ces récipients et des éléments extérieurs. Ce corps comprend une cavité qui communique avec une sortie. Le robinet ou le récipient comporte un clapet interne obturant l'entrée du corps, et assurant ainsi un premier niveau d'étanchéité du récipient au passage du fluide. Ce clapet est par exemple réalisé sous forme de clapet anti-retour. Il comprend par exemple une bille sollicitée contre un siège d'étanchéité par un ressort, en position d'obturation. Ce clapet est par exemple disposé dans un conduit de passage de fluide de sorte que le gaz sous pression exerce sur lui un effort de fermeture. Ce type de robinet comprend une tige de manoeuvre susceptible d'actionner le clapet interne pour permettre l'évacuation du fluide. Au- delà d'une certaine course, la tige exerce un effort d'ouverture sur le clapet interne de sécurité, libérant ainsi le passage du fluide contenu dans le récipient vers un élément extérieur. Un dispositif manuel tel qu'un volant permet de déplacer cette tige selon son axe. Le dispositif de manoeuvre de la tige est placé à l'extérieur du corps de robinet. La tige s'étend donc du dispositif de manoeuvre jusqu'à l'intérieur du corps de robinet.

Pour assurer l'étanchéité du corps de robinet au niveau de la traversée de la tige, on dispose généralement une garniture de presse étoupe. Cette garniture est habituellement constituée d'un empilement de bagues en PTFE entourant la tige. Ces bagues sont comprimées selon l'axe de la tige, entre une butée du corps de robinet et un fouloir de presse étoupe, au moyen de vis. Cette compression axiale des bagues conduit à une expansion radiale de ces bagues. Grâce à cette expansion radiale, les bagues viennent au contact de la tige et assurent ainsi l'étanchéité de la cavité du corps par rapport à l'extérieur.

Cette solution présente des inconvénients. Le robinet peut présenter des fuites, pendant sa manipulation en particulier. Durant la manipulation du robinet, le clapet de sécurité est ouvert et laisse donc passer le fluide dans la cavité du corps. Le presse-étoupe est alors soumis à la pression du fluide, pouvant atteindre 200 bars, et doit assurer l'étanchéité de la cavité. Or le dispositif de presse- étoupe présente des fuites régulières inhérentes à cette technologie. Les personnes chargées de manipuler les récipients, contenant généralement des produits nocifs tels que du HCl, sont obligées de manipuler le robinet pour l'ouvrir ou le fermer et sont ainsi exposées à ces émanations. De plus, la commande manuelle ne permet pas de régler le débit du robinet avec une vitesse et une précision suffisante. Par ailleurs si un problème de fuite en aval du robinet et qu'une coupure immédiate du fluide est à réaliser, la commande manuelle n'est pas un moyen adapté. En outre, dans un tel cas, une fuite peut avoir un impact conséquent sur l'environnement avant qu'un opérateur puisse intervenir dans de bonnes conditions.

Il a été proposé de munir les manipulateurs du robinet de combinaisons protectrices mais cette solution rend plus difficile la manipulation du robinet.

Par ailleurs, GB-A-2 118 329 divulgue une soupape de sécurité pneumatique en cas de surpression dans des pipe-lines, chaudières et autres applications similaires. Il est aussi connu de US-A-5 127 436 un adaptateur et réducteur de pression pour des bouteilles de gaz sous haute pression.

L'invention propose une solution à ces différents problèmes ; elle propose ainsi un robinet pour récipient de fluide, comprenant un corps de robinet présentant un passage de fluide, comprenant en outre un clapet obturant ledit passage de fluide, le clapet étant actionné par l'organe d'actionnement et disposé de sorte que le fluide exerce sur lui un effort de fermeture, un organe d'actionnement mobile provoquant l'ouverture et la fermeture dudit passage de fluide en fonction de sa position par rapport au corps, un verrouillage de l'organe d'actionnement en position fermée disposé à une extrémité de l'organe d'actionnement, un servomoteur déplaçant l'organe d'actionnement entre des positions correspondant à l'ouverture et à la fermeture dudit passage de fluide, comprenant en outre un verrouillage de l'organe d'actionnement en position de fermeture dudit passage de fluide et une commande de servomoteur placée à distance du robinet.

Selon une variante, le verrouillage est disposé à une extrémité axiale de l'organe d'actionnement.

Selon une autre variante, le servomoteur est susceptible de recevoir un fluide de commande sous pression déplaçant l'organe d'actionnement.

Selon encore une variante, le servomoteur comprend une chambre de pression apte à être reliée à une source de fluide de commande, un piston solidaire de l'organe d'actionnement, mobile dans la chambre de pression en fonction de la pression du fluide de commande dans la chambre de pression.

Selon encore une autre variante, le servomoteur comprend une membrane flexible reliant de façon étanche le piston à la chambre de pression.

On peut encore prévoir que le servomoteur comprenne un ressort sollicitant le piston vers une position de fermeture dudit passage de fluide.

Selon une variante, le robinet comprend en outre une électrovanne alimentant le servomoteur en fluide de commande, cette électrovanne étant commandée par la commande à distance.

Selon une autre variante, l'organe d'actionnement comprend un arbre monté en translation par rapport au corps.

L'invention a également pour objet un récipient comprenant un robinet tel que revendiqué.

Selon une variante, le récipient contient un fluide toxique, de préférence du HCI.

D'autres caractéristiques et avantages de l'invention apparaîtront à la lecture de la description qui suit des modes de réalisation de l'invention, donnés à titre d'exemple et en référence au dessin annexé, qui montre :

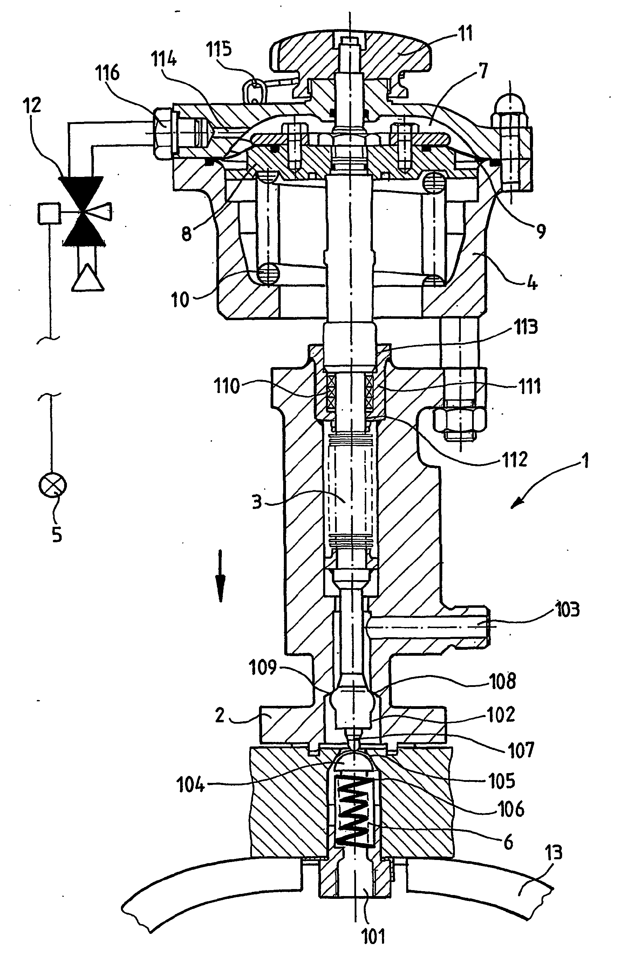

- figure 1, une vue schématique en coupe d'un ensemble de robinetterie selon l'invention.

L'invention propose un robinet pour récipient de fluide toxique, en particulier de type mobile, comprenant un organe d'actionnement relié à un servomoteur. Une commande placée à distance du robinet commande le déplacement de l'organe d'actionnement pour sélectionner une position d'ouverture ou de fermeture.

L'exemple qui suit détaille un mode de réalisation d'un robinet selon l'invention. La figure 1 est une vue schématique en coupe d'un ensemble de robinetterie selon l'invention. La figure montre un robinet 1 en position fermée, comprenant un corps 2 monté sur un récipient 13. Le corps présente un conduit 101, en communication avec le récipient, et présente également une cavité 102 en communication avec une sortie 103 du corps. Le corps présente en outre un organe d'obturation 6 fermant sélectivement le passage de fluide entre le conduit 101 et la cavité 102. Un organe d'actionnement 3 traverse depuis l'extérieur une paroi du corps et s'étend sensiblement sur toute la longueur de la cavité 102. Une de ses extrémités vient en vis- à- vis de l'organe d'obturation 6. L'organe d'actionnement 3 est solidaire d'un piston 8 mobile d'un servomoteur 4. Ce piston 8 est mobile dans une chambre de pression 7 du servomoteur 4. La chambre de pression 7 présente une entrée de fluide 114 reliée à une électrovanne 12. Cette électrovanne 12 est commandée par une commande 5 placée à distance du robinet.

Le robinet 1 comprend ainsi un corps 2. Le corps est fixé de façon étanche sur le récipient 13. Le corps peut ainsi être boulonné ou vissé sur une platine du récipient, en intercalant de préférence un joint entre le platine et le corps. La boulonnerie utilisée peut être du type à haute résistance. On peut également utiliser une boulonnerie à dureté limitée pour éviter la fragilisation par corrosion, cette corrosion étant particulièrement sensible au contact de l'hydrogène.

On peut utiliser un joint entre la platine et le robinet ou entre la platine et le récipient d'un type particulier. On peut ainsi envisager d'utiliser un joint d'étanchéité double du type spiralé du type métal/PTFE. L'étanchéité et la sécurité sont ainsi améliorées.

Le corps peut être réalisé en matériaux tels que l'acier au carbone, l'acier inoxydable, l'acier inoxydable austénitique ou dans un alliage à base de Nickel. Ces matériaux présentent notamment de bonnes propriétés de résistance à la corrosion. Il peut également être réalisé avec tout matériau présentant de bonnes caractéristiques mécaniques et préférablement une bonne résistance à la corrosion. Le conduit 101 du corps est placé en face d'une ouverture du récipient. Le fluide du récipient est ainsi en communication avec le conduit 101. Le corps comprend en outre l'organe d'obturation 6, sous la forme d'un clapet, obturant la communication entre le conduit 101 et la cavité 102 du corps en position fermée du passage de fluide. Le clapet 6 comprend un embout de clapet 104 et un ressort 106 (on peut également utiliser une boule en tant qu'embout de clapet). Lorsque le passage de fluide est en position fermée, le ressort 106 sollicite l'embout de clapet 104 contre un siège de clapet 105 réalisé sur le corps 2. Le clapet 6 assure ainsi dans cette position l'étanchéité entre le conduit 101 et la cavité 102.

La cavité 102 est en communication avec la sortie 103. Ainsi, lorsque le passage entre le conduit 101 et la cavité 102 est en position ouverte, le fluide du récipient peut s'écouler successivement à travers le conduit 101 et la cavité 102 jusqu'à la sortie 103. La sortie peut être munie d'un bouchon pour assurer son étanchéité, par exemple durant le transport ou le stockage du récipient. Ce bouchon peut présenter un filetage coopérant avec un filetage correspondant du corps. Le bouchon peut également s'assembler au corps par tout moyen de fixation étanche similaire.

L'organe d'actionnement 3 a dans le mode de réalisation présenté la forme d'un arbre allongé. L'organe d'actionnement peut être monté en translation par rapport au corps. Il peut ainsi se déplacer dans la direction représentée par la flèche de la figure 1. L'organe d'actionnement présente à l'une de ses extrémités une tête 107 en vis-, à- vis avec l'embout de clapet 104. Ainsi, lorsque l'organe d'actionnement est déplacé dans le sens de la flèche, la tête 107 vient au contact de l'embout de clapet 104. La tête 107 agit donc directement sur l'embout de clapet 104 pour ouvrir le passage de fluide. L'organe d'actionnement peut être réalisé dans un matériau résistant à la corrosion. Il peut ainsi être réalisé dans un acier au carbone, un acier inoxydable ou dans un alliage de Nickel.

Dans le mode de réalisation représenté, l'organe d'actionnement traverse une paroi du corps. Une garniture de presse- étoupe 110 peut être disposée au niveau de la traversée de l'organe d'actionnement, pour assurer l'étanchéité du corps de robinet. Cette garniture peut être réalisée avec un empilement de bagues en PTFE entourant l'organe d'actionnement. Cette garniture 110 peut être placée dans un support 111 de garniture rapporté sur le corps. Ce support 111 peut également présenter des portées 112 et 113. Le support 111 peut ainsi assurer le guidage de l'organe d'actionnement par rapport au corps.

Un servomoteur 4 est disposé au- dessus du corps de robinet. Il comprend la chambre de pression 7, dans laquelle est disposé le piston 8. Le piston 8 est solidaire de l'organe d'actionnement dans la direction représentée par la flèche. Le piston peut ainsi exercer un effort dans cette direction sur l'organe d'actionnement. Le piston peut être relié par une membrane flexible 9 à la chambre de pression. Le piston peut ainsi se déplacer par rapport à la chambre de pression. La chambre de pression peut être réalisée en acier au carbone, en acier inoxydable ou en fonte ductile. Le piston peut également être réalisé en acier inoxydable ou en acier au carbone. La membrane peut être réalisée en élastomère ou en plastique souple sur une toile spéciale étanche.

Un ou plusieurs ressorts 10 sollicitent le piston 8 vers la position de fermeture du passage de fluide. On évite ainsi que des secousses accidentelles, lors du transport par exemple, occasionnent un déplacement de l'organe d'actionnement. La position de fermeture du passage de fluide est ainsi maintenue pour éviter des fuites accidentelles du robinet.

La chambre de pression présente un conduit 114 par lequel elle peut être mise en communication avec une source de fluide de commande sous pression. Un bouchon 116 peut ainsi relier le conduit 114 à une conduite provenant de la source de fluide de commande. Lorsqu'un fluide sous pression est introduit dans la chambre de pression 7, le fluide de commande exerce un effort sur le piston. Cet effort permet le déplacement du piston et de la tige vers une position d'ouverture du passage de fluide.

Le conduit 114 peut être relié à une électrovanne 12. La chambre de pression est alors en communication avec un fluide de commande fourni par l'électrovanne. On peut utiliser une électrovanne à deux états qui alimente sélectivement la chambre de pression soit avec un fluide de commande à une pression de commande d'ouverture déterminée, soit avec un fluide de commande à une pression atmosphérique. Le temps de réponse d'une électrovanne étant généralement faible, on diminue ainsi le temps nécessaire pour commuter entre la position ouverte et la position fermée du passage de fluide. On peut utiliser un fluide de commande gazeux tel que de l'air ou de l'azote. Le fluide de commande gazeux est préférentiellement utilisé à une pression inférieure à 10 bars. On peut également choisir un fluide de commande liquide tel que de l'huile ou un liquide peu compressible tel que du liquide de freinage automobile. Le fluide de commande sous pression peut être fourni par exemple par un récipient de gaz sous pression ou par un compresseur.

Une commande de servomoteur, placée à distance du corps de robinet commande l'état de l'électrovanne. Cette commande est de préférence placée dans une zone externe sécurisée. Cette commande envoie un signal d'ouverture ou de fermeture à l'électrovanne. Cette commande peut par exemple être placée à une distance de 20 mètres du corps de robinet ou à une distance adéquate pour permettre d'isoler un manipulateur des fuites éventuelles du corps du robinet ou du récipient. Elle peut également être placée dans une cabine isolée du récipient. Cette commande peut générer un signal de commande électrique que l'on transmet à l'électrovanne par l'intermédiaire d'une ligne électrique. On peut également utiliser toute commande appropriée telle qu'une commande par radio ou une commande par câble mécanique.

Selon une variante, l'organe d'actionnement comporte également une excroissance 109, destinée à coopérer avec un siège 108 ménagé dans le corps du robinet. L'excroissance de l'organe d'actionnement reste en contact avec le siège du corps lorsque le passage de fluide est en position fermée. La combinaison de l'excroissance 109 et du siège 108 permet ainsi d'assurer une étanchéité supplémentaire au robinet.

Le robinet peut par ailleurs présenter un verrouillage de l'organe d'actionnement en position fermée. Ce verrouillage peut être obtenu en réalisant un filetage sur une extrémité de l'organe d'actionnement et en fixant une mollette 11 présentant un filetage correspondant. Le verrouillage peut par exemple être réalisé sur une extrémité axiale de l'organe d'actionnement, et de préférence sur une extrémité axiale de la tige d'actionnement en saillie vers l'extérieur. La mollette peut présenter être vissée jusqu'à venir en butée, par exemple sur le servomoteur et ainsi empêcher tout mouvement de l'organe d'actionnement. Le verrouillage peut ainsi être maintenu même lorsqu'un gaz sous pression est introduit dans la chambre de pression. Il est également possible de placer une goupille 115 rattachant la mollette 11 au servomoteur et maintenant la mollette en position. Ainsi, la mollette n'est pas susceptible de se dévisser sous l'effet de vibrations éventuelles. Le passage de fluide peut ainsi être maintenu de façon encore plus sûre en position fermée.

Selon une autre variante, il est possible de réaliser le piston au moyen d'une plaque solidaire de l'organe d'actionnement, de forme sensiblement circulaire, et comportant un joint à sa périphérie. Le joint, tel qu'un joint torique ou un joint à lèvre, assure l'étanchéité de la plaque par rapport à la chambre de pression.

Selon encore une variante, on peut utiliser une électrovanne dont l'ouverture est réglable de façon à faire varier la pression du fluide de commande qui alimente la chambre de pression. On peut ainsi régler la course de l'organe d'actionnement. Le débit de fluide au niveau du passage de fluide peut ainsi être réglé à une valeur souhaitée.

On va maintenant détailler le fonctionnement du robinet de la figure 1. Un opérateur commute la commande en position d'ouverture du passage de fluide. L'électrovanne reçoit le signal de commande et met alors en communication la chambre de pression avec le fluide de commande sous pression. Lorsque l'organe d'actionnement n'est pas verrouillé, la pression de fluide de commande agit sur le piston et la membrane. Le piston et l'organe d'actionnement se déplacent alors dans le sens indiqué par la flèche de la figure 1. La tête de l'organe d'actionnement rentre en contact avec l'embout de clapet 104. Le cas échéant, l'excroissance 109 de l'organe d'actionnement se décale du siège 108. En poursuivant le déplacement de l'organe d'actionnement, l'embout de clapet est décollé du siège 105. Le conduit 101 et la cavité 102 sont ainsi mises en communication. Le fluide peut ainsi s'écouler jusqu'à la sortie 103.

Lorsqu'un utilisateur commute la commande en position de fermeture du passage de fluide, un signal de commande est envoyé à l'électrovanne. L'électrovanne met alors en communication la chambre de pression avec un fluide de commande à la pression atmosphérique ou à une pression insuffisante pour maintenir le passage de fluide en position ouverte. Sur le piston, la force exercée par le ressort 10 est supérieure à la force exercée par le fluide de commande. Ainsi le piston se déplace dans le sens contraire de la flèche. Ainsi la tête de l'organe d'actionnement se déplace jusqu'à ne plus exercer d'effort sur l'embout de clapet. Le ressort 106 sollicite l'embout de clapet 104 contre le siège de clapet 105. La communication entre le conduit 101 et la cavité 102 est ainsi coupée, le passage de fluide est donc en position fermée.

Selon la variante à électrovanne avec ouverture réglable, l'utilisateur peut commander une ouverture intermédiaire de passage de fluide, en fonction de la pression de fluide de commande délivrée par l'électrovanne. Le débit du passage de fluide peut ainsi être rapidement modifié. Un tel robinet peut également comporter une position de fermeture d'urgence au niveau de la commande pour fermer le robinet en un temps minimum.

L'invention concerne également un récipient sur lequel est monté un robinet tel que décrit précédemment. Ce récipient, de forme sphérique ou cylindrique, comporte généralement une ouverture boulonnée sur laquelle est disposé ledit robinet. Le robinet peut être assemblé au récipient par tout moyen adéquat. Il peut ainsi être assemblé par vissage comme décrit précédemment au niveau de l'ouverture précitée. Un tel récipient résiste de préférence à des pressions supérieures à 50 bars. Il est en outre souhaitable de réaliser un récipient résistant à des pressions supérieures à 100 bars. Le récipient peut par exemple être réalisé en acier ou dans tout matériau présentant de bonnes caractéristiques mécaniques, et de préférence une bonne résistance à la corrosion.

On peut ainsi utiliser un tel récipient sous la forme d'un récipient mobile pour le transport de fluides toxiques sous pression, notamment pour le transport de fluides tels que du HCl.

Bien entendu, la présente invention n'est pas limitée aux exemples et modes de réalisation décrits et représentés, mais elle est susceptible de nombreuses variantes accessibles à l'homme de l'art.

## Revendications

1. Robinet (1) pour récipient (13) de fluide, comprenant :
- un corps (2) de robinet :
- présentant un passage (101, 102) de fluide ;
- comprenant en outre un clapet (6) :
- obturant ledit passage de fluide;
- disposé de sorte que le fluide exerce sur lui un effort de fermeture ;
- un organe d'actionnement mobile (3) comprenant un arbre monté en translation par rapport au corps ;
dans lequel ledit organe d'actionnement provoque l'ouverture et la fermeture dudit passage de fluide (101, 102) en fonction de sa position par rapport au corps (2), le clapet étant actionné par l'organe d'actionnement mobile pour ouvrir le passage de fluide,
**caractérisé en ce qu'**il comprend en outre :
- un servomoteur (4) déplaçant l'organe d'actionnement (3) entre des positions correspondant à l'ouverture et à la fermeture dudit passage de fluide ;
- une commande (5) de servomoteur placée à distance du robinet, et
- un dispositif de verrouillage de l'organe d'actionnement (3) en position de fermeture dudit passage de fluide disposé à une extrémité de l'organe d'actionnement (3).

2. Le robinet selon la revendication 1, **caractérisé en ce que** le dispositif de verrouillage est disposé à une extrémité axiale de l'organe d'actionnement (3) en saillie vers l'extérieur.

3. Robinet selon la revendication 1 ou 2, **caractérisé en ce que** le servomoteur (4) est susceptible de recevoir un fluide de commande sous pression déplaçant l'organe d'actionnement.

4. Robinet selon la revendication 3, **caractérisé en ce que** le servomoteur comprend :
- une chambre de pression (7) apte à être reliée à une source (12) de fluide de commande ;
- un piston (8) solidaire de l'organe d'actionnement, mobile dans la chambre de pression en fonction de la pression du fluide de commande dans la chambre de pression.

5. Robinet selon la revendication 4, **caractérisé en ce que** le servomoteur comprend une membrane (9) flexible reliant de façon étanche le piston à la chambre de pression.

6. Robinet selon l'une des revendications 4 ou 5, **caractérisé en ce que** le servomoteur comprend un ressort (10) sollicitant le piston vers une position de fermeture dudit passage de fluide.

7. Robinet selon l'une des revendications 3 à 6, **caractérisé en ce qu'**il comprend en outre une électrovanne (12) alimentant le servomoteur en fluide de commande, cette électrovanne étant commandée par la commande à distance (5).

8. Robinet selon l'une des revendications 1 à 7, **caractérisé en que** l'organe d'actionnement comporte une excroissance (109) destinée à coopérer avec un siège (108) ménagé dans le corps du robinet, ladite excroissance (109) restant en contact avec ledit siège (108) lorsque le passage du fluide est en position fermée.

9. Récipient (13) comprenant un robinet (1) selon l'une quelconque des revendications précédentes.

10. Utilisation du récipient selon la revendication 9 pour contenir un fluide toxique, de préférence du HCl.

## Claims

1. A valve (1) for a fluid container (13), comprising:
- a valve body (2):
- having a fluid passage (101, 102);
- further comprising a valve (6):
- closing off said fluid passage,
- placed such that the fluid exerts a closing force on the valve;
- a movable actuating member (3) comprising a shaft mounted so that it can move in translation with respect to the body.
in which said movable actuating member causes said fluid passage (101, 102) to open and close depending on its position with respect to the body (2), the valve being actuated by the movable actuating member to open the fluid passage;
**characterized in that** it further comprises:
- a servomotor (4) moving the actuating member (3) between positions corresponding to opening and closing said fluid passage;
- a servomotor control (5) placed at some distance from the valve, and
- a mechanism for locking the actuating member (3) in the closed position of said fluid passage, placed at one end of the actuating member (3).

2. The valve as claimed in claim 1, **characterized in that** the locking mechanism is placed at one axial end of the actuating member (3) projecting outwardly.

3. The valve as claimed in claim 1 or 2, **characterized in that** the servomotor (4) is adapted for receiving a pressurized control fluid moving the actuating member.

4. The valve as claimed in claim 3, **characterized in that** the servomotor comprises:
- a pressure chamber (7) capable of being connected to a source (12) of control fluid;
- a piston (8) integral with the actuating member, which can be moved in the pressure chamber according to the pressure of the control fluid in the pressure chamber.

5. The valve as claimed in claim 4, **characterized in that** the servomotor comprises a flexible membrane (9) connecting the piston in a sealed manner to the pressure chamber.

6. The valve as claimed in either of claims 4 and 5, **characterized in that** the servomotor comprises a spring (10) urging the piston towards a closed position of said fluid passage.

7. The valve as claimed in one of claims 3 to 6, **characterized in that** it further comprises a solenoid valve (12) feeding the servomotor with control fluid, this solenoid valve being controlled by the remote control (5).

8. The valve as claimed in one of claims 1 to 7, **characterized in that** the actuating member also comprises a protrusion (109), intended to cooperate with a seat (108) made in the valve body, said protrusion (109) staying in contact with said seat (108) when the fluid passage is in the closed position.

9. A container (13) comprising a valve (1) according to any one of the preceding claims.

10. Use of the container as claimed in claim 9, for containing a toxic fluid, preferably HCI.

## Patentansprüche

1. Ventil(1) für einen Fluidbehälter (13), umfassend
- einen Ventilkörper (2):
- mit einen Fluiddurchgang (101, 102);
- mit außerdem einer Ventilklappe (6)
- welche den genannten Fluiddurchgang verschließt;
- die derart angeordnet ist, dass das Fluid auf sie eine Verschließkraft ausübt;
- mit einem bewegbaren Betätigungsmittel (3), das eine gegenüber dem Körper verschiebbar montierte Welle umfasst;
in welcher das genannte Mittel die Öffnung und die Schließung des erwähnten Fluiddurchgangs (101, 102) je nach seiner Stellung gegenüber vom Körper (2) veranlasst, wobei die Ventilkappe durch das bewegliche Betätigungsmittel betätigt wird, um den Fluiddurchgang zu öffnen;
**dadurch gekennzeichnet, dass** es außerdem umfasst:
einen Stellantrieb(4), der das Betätigungsmittel(3) zwischen Stellungen bewegt, die der Öffnung und der Schließung des erwähnten Fluiddurchgangs entsprechen;
- eine Stellantriebsteuerung (5), die mit Abstand vom Ventil angeordnet ist, und
- eine Verriegelungsvorrichtung, für die Verriegelung des Betätigungsmittels (3) in Schließstellung des erwähnten, auf einem Ende des Betätigungsmittels angeordneten Fluiddurchgangs (3).

2. Ventil nach Anspruch 1, **dadurch gekennzeichnet, dass** die Verriegelungsvorrichtung auf einem axialen Ende des Betätigungsmittels (3), nach Außen vorspringend angeordnet ist.

3. Ventil nach Anspruch 1 oder 2, **dadurch gekennzeichnet, dass** der Stellantrieb (4) ein unter Druck stehendes Steuerfluid, das das Betätigungsmittel bewegt empfangen kann.

4. Ventil nach Anspruch 3, **dadurch gekennzeichnet, dass** der Stellantrieb umfasst
- eine mit einem Steuerfluidquelle (12) verbindbare Druckkammer (7);
- einen mit dem Betätigungsmittel aus einem Stück bestehenden, je nach dem Druck des Steuerfluids in der Druckkammer bewegbaren Kolben (8).

5. Ventil nach Anspruch 4, **dadurch gekennzeichnet, dass** der Stellantrieb eine biegsame, den Kolben dicht mit der Druckkammer verbindende Membran (9) umfasst.

6. Ventil nach einem der Ansprüche 4 oder 5, **dadurch gekennzeichnet, dass** der Stellantrieb eine Feder (10) umfasst, die den Kolben in eine Schließstellung des erwähnten Fluiddurchgangs beansprucht.

7. Ventil nach einem der Ansprüche 3 bis 6, **dadurch gekennzeichnet, dass** es außerdem ein Elektroventil (12) umfasst, das den Stellantrieb mit Steuerfluid versorgt, wobei dieses Elektroventil durch die Fernsteuerung (5) gesteuert wird.

8. Ventil nach einem der Ansprüche 1 bis 7, **dadurch gekennzeichnet, dass** das Betätigungsmittel eine Ausstülpung (109) umfasst, die dazu vorgesehen ist, um mit einem Sitz (108) zusammenzuwirken, der im Ventilkörper vorgesehen ist, wobei die genannte Ausstülpung (109) mit dem genannten Sitz (108) in Kontakt bleibt, wenn der Fluiddurchgang in geschlossener Stellung ist.

9. Behälter, (13) umfassend ein Ventil (1) nach einem der vorangehenden Ansprüche.

10. Benutzung des Behälters nach Anspruch 9, um ein toxisches Fluid, vorzugsweise HC1 zu beinhalten.
